(19) Europäisches Patentamt
European Patent Office
Office européen des brevets

(11) **EP 1 873 737 B1**

(12) **EUROPÄISCHE PATENTSCHRIFT**

(45) Veröffentlichungstag und Bekanntmachung des Hinweises auf die Patenterteilung:
**18.08.2010  Patentblatt 2010/33**

(51) Int Cl.:
***G08G 1/16*** *(2006.01)*

(21) Anmeldenummer: **07109879.2**

(22) Anmeldetag: **08.06.2007**

(54) **Verfahren zur Erkennung einer kritischen Situation vor einem Kraftfahrzeug**

Method for identifying a critical situation in front of a motor vehicle

Procédé destiné à la détection d'une situation critique devant un véhicule

(84) Benannte Vertragsstaaten:
**DE FR GB IT SE**

(30) Priorität: **29.06.2006   DE 102006029995**

(43) Veröffentlichungstag der Anmeldung:
**02.01.2008   Patentblatt 2008/01**

(73) Patentinhaber: **ROBERT BOSCH GMBH**
**70442 Stuttgart (DE)**

(72) Erfinder:
• **Jordan, Ruediger**
**70192 Stuttgart (DE)**
• **Schwindt, Oliver**
**71277 Rutesheim (DE)**

(56) Entgegenhaltungen:
**EP-A1- 0 657 857**      **US-A1- 2002 003 489**
**US-A1- 2005 171 675**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Erkennung einer kritischen Situation in einem Bereich vor einem Kraftfahrzeug mit einem Objektdetektionssensor.

Aus der DE 101 32 386 A1 ist ein Verfahren zum Assistieren eines Fahrers eines Kraftfahrzeuges bekannt, in welchem eine Vorhersage der aktuellen Situation des Umfelds eines Kraftfahrzeugs aus erfassten Informationen über die äußere Umgebung des Kraftfahrzeugs abgeleitet werden und basierend auf dieser Situationsvorhersage eine Entscheidung über Gegenmaßnahmen getroffen wird. Es wird eine Vorhersage der Fahrerreaktion getroffen und die Fahrerreaktionsvorhersage und die Situationsvorhersage werden miteinander verknüpft, um zu einer Entscheidung über Gegenmaßnahmen zu gelangen.

Aus der US 2002/0003489 A1 ist ein Objekterkennungssystem bekannt, bei dem Messstrahlung in einen vor dem Fahrzeug gelegenen Messbereich der Breite nach ausgestrahlt wird. Diese Messstrahlung wird an Objekten vor dem Fahrzeug reflektiert und die reflektierte Strahlung empfangen. Für jedes erkannte Objekt wird eine Gleichspurwahrscheinlichkeit berechnet, die angibt, mit welcher Wahrscheinlichkeit sich das erkannte Objekt auf der gleichen Fahrspur befindet, wie das eigene Fahrzeug. Falls zwei Objekte in einer annähernd gleichen Position erkannt werden, wird dieses als ein einziges Objekt bestimmt. Die Daten des Objekts, das eine Gleichspurwahrscheinlichkeit aufweist, die gleich oder höher als eine vorgegebene Gleichspurwahrscheinlichkeit ist, werden teilweise dem als einziges Objekt erkannten Objekt zugeordnet.

Die DE 196 00 059 A1 beschreibt eine Situation, bei der Kraftfahrzeuge beabstandet hintereinander fahren. Eine Auswertung von Echosignalen ermöglicht eine Bestimmung von Parametern, insbesondere den gegenseitigen Abstand der beiden vorausfahrenden Fahrzeuge. Auch Beschleunigungswerte sind ermittelbar. Das Verfahren und die Radaranordnung sind besonders vorteilhaft für den sogenannten Konvoi-Leitverkehr. Günstig ist auch die Möglichkeit, aus dem gegenseitigen Abstand vorausfahrender Fahrzeuge und eventuell dessen zeitlicher Veränderung Folgerungen für das eigene Fahrverhalten, insbesondere unter Sicherheitsgesichtspunkten, abzuleiten.

Der Erfindung liegt die Aufgabe zugrunde, kritische Situationen und Unfälle in einem Bereich vor dem eigenen Kraftfahrzeug zu erkennen. Insbesondere sollen Auffahrunfälle detektiert werden.

Diese Aufgabe wird gemäß der Merkmale des unabhängigen Anspruchs 1 gelöst. Gemäß Anspruch 1 werden dabei folgende Verfahrensschritte angewandt: vor dem Kraftfahrzeug werden zumindest zwei weitere Kraftfahrzeuge detektiert, es werden ein Abstand der zwei weiteren Kraftfahrzeuge zueinander und eine Relativgeschwindigkeit ermittelt, mit der sich die zwei weiteren Kraftfahrzeuge einander nähern und in Abhängigkeit ... des Abstands, der Relativgeschwindigkeit und einer vorgebbaren Konstanten, die maximal mögliche oder durchschnittliche Beschleunigungswerte der beiden Kraftfahrzeuge berücksichtigt, wird ein Warnsignal ausgegeben.

Ein Objektdetektionssensor ist verwendet, um den Bereich vor dem eigenen Kraftfahrzeug zu beobachten und um einen Unfall zu erkennen. Insbesondere ist ein Radargerät als Objektdetektionssensor dafür geeignet, da dieser Sensor nicht nur das Vorderfahrzeug, sondern auch das davor fahrende Fahrzeug mit einer guten Messrate detektiert. Solch ein Radargerät ist bereits für eine angepasste Geschwindigkeitsregelung verwendet. Die angepasste Geschwindigkeitsregelung wird im Englischen auch als adaptive cruise control oder kurz als ACC bezeichnet. Für die angepasste Geschwindigkeitsregelung ist ein Geschwindigkeitsregler vorgesehen, der zumindest einen Mikroprozessor, kurz als µProzessor oder µP bezeichnet, und einen Speicher aufweist. In dem Speicher sind Programme zur Durchführung von Verfahren abspeicherbar und mittels des µP durchführbar. Wenn die beiden vorausfahrenden Fahrzeuge einen geringen Abstand zueinander aufweisen und sich mit hoher Relativgeschwindigkeit aufeinander zu bewegen, dann ist mit hoher Wahrscheinlichkeit ein Unfall unvermeidbar. Relativgeschwindigkeit und Abstand sind voneinander abhängig. Bei einem geringen Abstand ist bereits eine geringe Relativgeschwindigkeit der Fahrzeuge zueinander ausreichend und bei einem größeren Abstand eine höhere Relativgeschwindigkeit notwendig, um einen Unfall auszulösen. Dabei ist auch noch zumindest eine vorgebbare Konstante berücksichtigt, in der maximal mögliche oder durchschnittliche Beschleunigungswerte der beiden Fahrzeuge einfließen. Die Abhängigkeit von Relativgeschwindigkeit, Abstand und vorgebbarer Konstante ist in einem Speicher als Kennlinienschar ablegbar. Alternativ dazu sind die Konstanten, die die Beschleunigungswerte berücksichtigen und eine Funktion abspeicherbar, und der µProzessor vergleicht ständig Relativgeschwindigkeit, Abstand und Konstante und berechnet jedes Mal neu, ob ein Unfall wahrscheinlich ist. Damit sind insbesondere schwere Auffahrunfälle vorhersagbar, auch sind Auffahrunfälle an einem Stauende vorhersagbar.

Das Radargerät muss das vorausfahrende Fahrzeug und das Fahrzeug davor stabil detektieren. Dabei ist berücksichtigt, dass Radarreflexe in Leitplanken wandern oder auch auf andere Fahrzeuge überspringen können. Das Überspringen und Wandern der Radarreflexe ist auf wenige Meter begrenzt und definiert einen dynamischen Bereich. Die Fahrzeuge müssen vorab ausreichend voneinander getrennt sein, um eine sichere Vorhersage treffen zu können. Erst mit einer ausreichenden Trennung, die einem Mindestabstand zwischen den Fahrzeugen entspricht, ist feststellbar, dass die Radarreflexe von verschiedenen Fahrzeugen stammen.

Werden eine Relativgeschwindigkeit und ein Abstand ermittelt, die einen Unfall wahrscheinlich machen, so wird haptisch, insbesondere akustisch gewarnt. Befindet sich das eigene Fahrzeug im ACC-Betrieb, so wird eine Bremsung eingeleitet. Damit ist verhindert, dass das eigene Fahrzeug in diesen Unfall verwickelt wird, zumindest sind Unfallfolgen gemindert. Des Weiteren werden Vorsorgemaßnahmen eingeleitet, dazu gehören ein Straffen des Gurtes, ein Schließen der Fenster und ein Umparametrieren eines Bremsassistenten.

Zum besseren Verständnis der Erfindung wird nachstehend ein Ausführungsbeispiel anhand der Zeichnung näher erläutert.

Es zeigen

Fig. 1    drei in einer Spur hintereinander fahrende Kraftfahrzeuge in Draufsicht und

Fig. 2    die drei Kraftfahrzeuge in Seitenansicht.

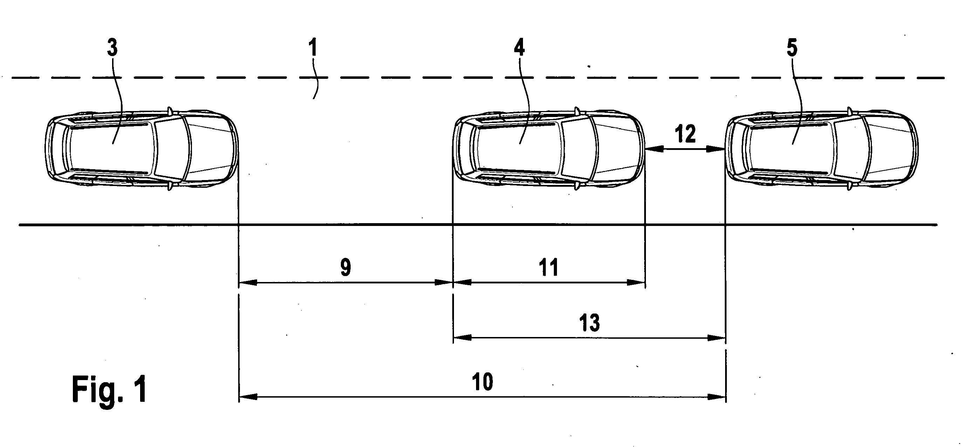

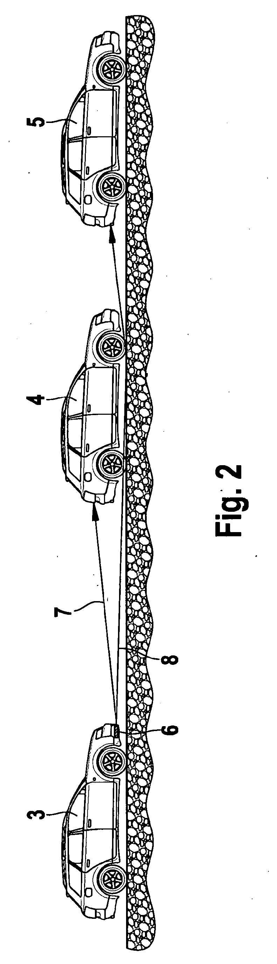

Figuren 1 und 2 zeigen drei in einer Spur 1 auf einer Fahrbahn 2 hintereinander fahrende Kraftfahrzeuge 3, 4 und 5, die als hinteres Fahrzeug 3, als mittleres Fahrzeug 4 und als vorderes Fahrzeug 5 bezeichnet sind. Die Fahrzeuge werden auch als Objekte oder Autos bezeichnet. Das mittlere Fahrzeug 4 und das vordere Fahrzeug 5 sind vorausfahrende Fahrzeuge. Das hintere Fahrzeug 3 ist mit einem 77 Ghz Radargerät 6 ausgerüstet und fährt im ACC Betrieb. Das Radargerät 6, auch als Radarsensor oder als Sensor bezeichnet, detektiert das direkt davor fahrende mittlere Fahrzeug 4 mittels eines ausgesendeten Radarstrahles 7, der von dem mittleren Fahrzeug 4 reflektiert und von dem Radargerät 6 empfangen wird. Des Weiteren sendet das Radargerät 5 einen weiteren Radarstrahl 7 aus, der unter dem mittleren Fahrzeug 3 hindurchgeht, von der Fahrbahn 2 reflektiert wird und dann auf das vordere Fahrzeug 5 trifft. Von dem vorderen vorausfahrenden Fahrzeug 5 wird der Radarstrahl reflektiert, von der Fahrbahn 2 nochmals reflektiert und von dem Radargerät 6 empfangen. Die Detektion des vorderen Fahrzeugs 5 setzt voraus, dass der Radarstrahl 8 zweimal von der Fahrbahn 2 reflektiert wird. Die Detektion des vorderen Fahrzeugs ist daher schwieriger. Die Wahrscheinlichkeit, das vordere Fahrzeug 5 zu detektieren, ist daher geringer, als die Wahrscheinlichkeit, das direkt davor fahrende mittlere Fahrzeug 4 zu detektieren. Dennoch lässt sich in vielen Fällen das vordere Fahrzeug 5 mit einer guten Messrate detektieren. Das hintere Fahrzeug 3 weist einen ersten Abstand 9, auch als S1 bezeichnet, zu dem vorausfahrenden mittleren Fahrzeug 4 und einen zweiten Abstand 10, auch als S2 bezeichnet, zu dem vorderen Fahrzeug 5 auf. Dabei ist von der vorderen Stoßstange des hinteren Fahrzeugs 3 zu der hinteren Stoßstange des mittleren Fahrzeugs 4 und von der vorderen Stoßstange des hinteren Fahrzeugs 3 zu der hinteren Stoßstange des vorderen Fahrzeugs 5 gemessen. Das mittlere Fahrzeug 4 weist eine Fahrzeuglänge 11, auch als L bezeichnet, und einen dritten Abstand 12, auch als S3 bezeichnet, zu dem vorderen Fahrzeug 5 auf. Der dritte Abstand 12 erstreckt sich von der vorderen Stoßstange des mittleren Fahrzeugs 4 zu der hinteren Stoßstange des vorderen Fahrzeugs 5. Um das mittlere Fahrzeug 4 und das vordere Fahrzeug 5 mittels des Radargerätes 6 eindeutig voneinander unterscheiden zu können, müssen diese ausreichend voneinander getrennt sein. Die Fahrzeuglänge 11 des mittleren Fahrzeugs 4 ist mittels des Radargerätes 6 nicht feststellbar, daraus folgt, dass auch der Abstand 12 nicht feststellbar ist. Daher müssen mehrere Voraussetzungen erfüllt sein. Eine erste Voraussetzung ist dadurch gegeben, dass eine Differenz 13, auch als D bezeichnet, der Abstände 9 und 10 zwischen dem hinteren Fahrzeug 3 und dem mittleren Fahrzeug 4 sowie dem hinteren Fahrzeug 3 und dem vorderen Fahrzeug 5 größer als 9 m ist, um sicherzustellen, dass die beiden gemessenen vorausfahrenden Objekte 4 und 5 nicht zu einem Lastzug mit Zugmaschine und Hänger gehören. Eine zweite Voraussetzung ist dadurch gegeben, dass die Differenz 13 größer als ein dynamischer Bereich sein soll, um sicherzustellen, dass Radarreflexe zwischen den beiden vorausfahrenden Fahrzeugen 4 und 5 über eine vorgebare Zeitdauer nicht überspringen. Die Differenz 13 entspricht von daher einer Trennfähigkeitsgrenze oder einem Mindestabstand 13, der einerseits durch einen Lastzug mit Hänger und Zugmaschine und andererseits auf Grund eines dynamischen Bereiches vorgegeben ist. Die beiden vorausfahrenden Objekte sind als zwei voneinander unabhängige Objekte erkannt, wenn die beiden vorausfahrenden Objekte 4 und 5 eine Differenz 13 größer als die Trennfähigkeitsgrenze aufweisen. Eine dritte Voraussetzung ist dadurch gegeben, dass das mittlere Fahrzeug 5 als sehr kleines Fahrzeug mit lediglich 3 m Fahrzeuglänge 11 angenommen ist. Mit einer kleinsten angenommenen Fahrzeuglänge 11 von 3 m für das mittlere Fahrzeug 4 und den beiden gemessenen Abständen 9 und 10 zum mittleren Fahrzeug 4 und zum vorderen Fahrzeug 5 lässt sich der dritte Abstand 12 zwischen den beiden vorausfahrenden Fahrzeugen ermitteln.

Gleichzeitig sind aus den ständig gemessenen Abständen 9 und 10 Relativgeschwindigkeiten der Fahrzeuge 4 und 5 zueinander ermittelbar.

Der dritte Abstand 12 wird mit einer Relativgeschwindigkeit v verglichen, um festzustellen, ob ein Unfall unvermeidbar geworden ist. Dabei ist berücksichtigt, dass die beiden vorausfahrenden Kraftfahrzeuge 4 und 5 beschleunigen können, um den Unfall zu vermeiden. Das mittlere Fahrzeug 4 wird negativ beschleunigen, also verzögern und das vordere Fahrzeug 5 positiv beschleunigen, also die Geschwindigkeit erhöhen, um den Unfall zu vermeiden. Die Beschleunigungswerte sind maximal mögliche oder durchschnittliche Beschleunigungswerte und fließen als Konstanten in den Vergleich von Abstand und Relativgeschwindigkeit ein.

Es sei angenommen, dass das mittlere Auto 4 mit einer maximalen Beschleunigung a1 von 10 m/s$^2$ bremsen kann und das vordere Auto 5 mit einer maximalen Beschleunigung a2 von 5 m/sec$^2$ beschleunigen

kann. Die Differenz D soll 10 m betragen. Mit einer Fahrzeuglänge L von 3m ergibt sich ein dritter Abstand S3 von 7m. Ein Quadrat der Relativgeschwindigkeit ist gleich oder größer der Summe beider Beschleunigungen a1 und a2 multipliziert mit dem Faktor 2 und dem Faktor dritter Abstand S3. Die Relativgeschwindigkeit v lässt sich dann mathematisch wie folgt darstellen:

$$v^2 \geq 0 + 2*(a1 + a2) * (D-L)$$

$$v^2 \geq 0 + 2*(a1 + a2) * S3$$

Damit ergibt sich eine Relativgeschwindigkeit von 14,49 m/s. Mit dem dritten Abstand S3 von 7 m reicht eine minimale Relativgeschwindigkeit von 14,49 m/s aus, um einen Unfall vorhersagen zu können.

Dies bedeutet, dass ständig die Abstände beider vorausfahrenden Kraftfahrzeuge 4 und 5 gemessen werden und daraus eine Relativgeschwindigkeit der beiden Kraftfahrzeuge 4 und 5 zueinander ermittelt wird. Liegt diese Relativgeschwindigkeit über dem Wert von 14,49 m/sec, so ist ein Unfall garantiert. Auf Grund einer ständigen Abstandsmessung ist eine erste Möglichkeit gegeben, eine Kollision vorherzusagen.

Dabei ist vorausgesetzt, dass sich alle drei Fahrzeuge in Geradeausfahrt auf gerader Strecke befinden und somit derselben Spur 1 zugeordnet werden können. Des Weiteren ist vorausgesetzt, dass eine ausreichende Winkelauflösung für beide vorausfahrenden Objekte 4, 5 möglich ist, um zu gewährleisten, dass diese nicht aneinander vorbeifahren. Mittels eines Winkel auflösenden Sensors 6 ist dies in einfacher Weise erzielbar. Ein Lateralversatz muss identisch beziehungsweise hochgradig ähnlich sein, damit sichergestellt ist, dass nicht zwei Motorräder in Quer- und Längsrichtung versetzt zueinander fahren.

Es ist davon auszugehen, dass während des Betriebszustandes für eine Bremsung durch einen Fahrer durchschnittliche Werte bei $7m/s^2$ und für eine Beschleunigung bei $2m/s^2$ liegen. Mit D = 10 m und L = 3 m liegt in diesem Fall die minimale Relativgeschwindigkeit bei v = 11,22 m/s, um einen Unfall zuverlässig detektieren zu können.

Mittels Radarsensoren 6, die nicht nur die Abstände von Fahrzeugen 4,5 detektieren, sondern auch die Geschwindigkeit vorausfahrender Fahrzeuge 4, 5 direkt detektieren, ist eine Kollision aufgrund von direkt detektierten Geschwindigkeiten vorhersagbar. Dabei wird die Frequenz der ausgesendeten Radarstrahlen mit der Frequenz der reflektierten und empfangenen Radarstrahlen verglichen und dann die Geschwindigkeit ermittelt. Damit ist eine zweite Möglichkeit gegeben, eine Kollision vorherzusagen.

Vorausfahrende Objekte 4, 5 müssen vor einem Unfall eindeutig als unabhängige Objekte 4, 5 detektierbar, das heißt eindeutig getrennt sein. Eine eindeutige Trennung ist mit einem Abstand 13 ab etwa 10 m gegeben. Objekte 4, 5 sind des weiteren dann eindeutig voneinander unterscheidbar, wenn diese verschiedene Geschwindigkeiten aufweisen. Die direkt detektierten Geschwindigkeiten der beiden Fahrzeuge 4, 5 müssen sich um mindestens 3 m/sec unterscheiden, um eine sichere Unterscheidung der Fahrzeuge 4, 5 anhand der Geschwindigkeiten vornehmen zu können. Bei 10 m Abstand der Fahrzeuge 4, 5 voneinander und einer Relativgeschwindigkeit von mehr als 11,22 m/sec ist die Unterscheidung anhand der Geschwindigkeit für zwei Fahrzeuge 4, 5 gegeben und ein Unfall vorhersagbar. Die Relativgeschwindigkeit der beiden vorausfahrenden Fahrzeuge 4, 5 darf den Wert von 3 m/sec während der Annäherung nicht unterschreiten, um eine sichere Unterscheidung der Fahrzeuge 4, 5 zu gewährleisten.

Eine dritte Möglichkeit die nicht Teil dieser Erfindung ist, einen Unfall zu detektieren ist dadurch gegeben, dass eine Kollision, also ein Zusammenstoß beider Objekte 4, 5 erkennbar ist. Dieser Stoß, auch als Ruck bezeichnet, ist als Beschleunigung oberhalb eines zulässigen Grenzwertes des vorderen Fahrzeugs 4 und als Verzögerung oberhalb eines zulässigen Grenzwertes des mittleren Fahrzeugs 5 detektierbar.

Allein aufgrund dieses Stoßes ist ein Unfall detektierbar. Die Detektion eines Unfallstoßes ist auch heranziehbar, um einen Unfall zusätzlich zu plausibilisieren. Es sind zumindest zwei Warnsignale ausgebbar, damit kann ein akustisches Signal in der Frequenz oder der Lautstärke geändert werden. Der Fahrer ist abhängig von den verschiedenen Möglichkeiten bereits vor dem Unfall, während des Unfalls oder nach dem Unfall warnbar.

**Patentansprüche**

1. Verfahren zur Erkennung einer kritischen Situation in einem Bereich vor einem Kraftfahrzeug (3) mit einem Objektdetektionssensor (6), mit folgenden Verfahrensschritten:

   - vor dem Kraftfahrzeug (3) werden zumindest zwei weitere Kraftfahrzeuge (4, 5) detektiert,
   - es werden ein Abstand (12) der zwei weiteren Kraftfahrzeuge (4, 5) zueinander und eine Relativgeschwindigkeit (v) ermittelt, mit der sich die zwei weiteren Kraftfahrzeuge (4, 5) einander nähern,
   **dadurch gekennzeichnet, dass**
   - in Abhängigkeit des Abstands (12), der Relativgeschwindigkeit (v) und einer vorgebbaren Konstanten, in die maximal mögliche oder durchschnittliche Beschleunigungswerte (a1, a2) der beiden Kraftfahrzeuge (4, 5) einfließen, ein Warnsignal ausgegeben wird.

2. Verfahren nach Anspruch 1, **dadurch gekenn-**

**zeichnet, dass**

- die Relativgeschwindigkeit (v) und der Abstand (12) zwischen den zwei weiteren Kraftfahrzeugen (4, 5) mittels der Konstanten miteinander verglichen werden und
- in Abhängigkeit des Vergleichs ein Warnsignal ausgegeben wird.

3. Verfahren nach Anspruch 1 oder 2, **dadurch gekennzeichnet, dass** die Relativgeschwindigkeit (v) aus Abständen (9, 10) des Kraftfahrzeugs (3) zu den zwei weiteren Kraftfahrzeugen (4,5) ermittelt wird.

4. Verfahren nach Anspruch 1 oder 2, **dadurch gekennzeichnet, dass** die Relativgeschwindigkeit (v) aus reflektierten Radarstrahlen (8) ermittelt wird.

5. Verfahren nach Anspruch 1 oder 2, **dadurch gekennzeichnet, dass** die Beschleunigungswerte (a1, a2) maximale Beschleunigungswerte sind.

6. Verfahren nach Anspruch 1 oder 2, **dadurch gekennzeichnet, dass** die Beschleunigungswerte (a1, a2) durchschnittliche Beschleunigungswerte sind.

7. Verfahren nach einem oder mehreren der vorhergehenden Ansprüche 1 bis 6 mit folgenden weiteren Verfahrensschritten:

- eine Beschleunigung oberhalb eines zulässigen Grenzwertes zumindest eines der zwei weiteren Kraftfahrzeuge (4, 5) wird festgestellt und
- ein zweites Warnsignal wird ausgegeben.

**Claims**

1. Method for identifying a critical situation in an area in front of a motor vehicle (3) with an object detection sensor (6), having the following method steps:

- at least two further motor vehicles (4, 5) are detected in front of the motor vehicle (3),
- a distance (12) between two further motor vehicles (4, 5) and a relative speed (v) at which the two further motor vehicles (4, 5) are approaching one another are determined,
**characterized in that**
- a warning signal is output as a function of the distance (12), the relative speed (v) and a predefinable constant which includes maximum possible or average acceleration values (a1, a2) of the two motor vehicles (4, 5).

2. Method according to Claim 1, **characterized in that**

- the relative speed (v) and the distance (12) between the two further motor vehicles (4, 5) are compared with one another by means of the constant, and
- a warning signal is output as a function of the comparison.

3. Method according to Claim 1 or 2, **characterized in that** the relative speed (v) is determined from distances (9, 10) between the motor vehicle (3) and the two further motor vehicles (4, 5).

4. Method according to Claim 1 or 2, **characterized in that** the relative speed (v) is determined from reflected radar beams (8).

5. Method according to Claim 1 or 2, **characterized in that** the acceleration values (a1, a2) are maximum acceleration values.

6. Method according to Claim 1 or 2, **characterized in that** the acceleration values (a1, a2) are average acceleration values.

7. Method according to one or more of the preceding Claims 1 to 6 having the following further method steps:

- an acceleration above a permissible limiting value of at least one of the two further motor vehicles (4, 5) is detected, and
- a second warning signal is output.

**Revendications**

1. Procédé pour détecter à l'aide d'une sonde (6) de détection d'objet une situation critique dans une zone située à l'avant d'un véhicule automobile (3), et présentant les étapes de procédé suivantes :

- au moins deux autres véhicules automobiles (4, 5) sont détectés en avant du véhicule automobile (3),
- une distance (12) entre les deux autres véhicules automobiles (4, 5) et une vitesse relative (v) à laquelle les deux autres véhicules automobiles (4, 5) s'approchent l'un de l'autre sont déterminées, **caractérisé en ce que**
- un signal d'avertissement est délivré en fonction de la distance (12), de la vitesse relative (v) et d'une constante prédéterminée dans laquelle interviennent les valeurs maximales possibles ou les valeurs moyennes (a1, a2) de l'accélération des deux véhicules automobiles (4, 5).

2. Procédé selon la revendication 1, **caractérisé en ce que** la vitesse relative (v) et la distance (12) entre les deux autres véhicules automobiles (4, 5) sont comparées l'une à l'autre au moyen des constantes et **en ce qu'**un signal d'avertissement est délivré en fonction de la comparaison.

3. Procédé selon les revendications 1 ou 2, **caractérisé en ce que** la vitesse relative (v) est déterminée à partir des distances (9, 10) entre le véhicule automobile (3) et les deux autres véhicules automobiles (4, 5).

4. Procédé selon les revendications 1 ou 2, **caractérisé en ce que** la vitesse relative (v) est déterminée à partir de faisceaux radar réfléchis (8).

5. Procédé selon les revendications 1 ou 2, **caractérisé en ce que** les valeurs d'accélération (a1, a1) sont des valeurs maximales d'accélération.

6. Procédé selon les revendications 1 ou 2, **caractérisé en ce que** les valeurs d'accélération (a1, a2) sont des valeurs moyennes d'accélération.

7. Procédé selon l'une ou plusieurs des revendications 1 à 6 qui précèdent, et présentant les étapes supplémentaires de procédé suivantes :

   - une accélération au-dessus d'une valeur limite admissible est constatée pour au moins l'un des deux autres véhicules automobiles (4, 5) et
   - un deuxième signal d'avertissement est délivré.

Fig. 1

**Fig. 2**

EP 1 873 737 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10132386 A1
- US 20020003489 A1

- DE 19600059 A1